# EUROPÄISCHE PATENTSCHRIFT

(11) **EP 4 460 775 B1**
(45) Veröffentlichungstag und Bekanntmachung des Hinweises auf die Patenterteilung: **27.05.2026**
(21) Anmeldenummer: 23738490.4
(22) Anmeldetag: 03.07.2023
(51) Int. Cl.: G06F 21/32, G06F 21/34, G06Q 20/32, G06Q 20/16, G06Q 20/38, G06Q 20/12

(54) **VERFAHREN ZUM BEZAHLEN VON WAREN UND/ODER DIENSTLEISTUNGEN**
METHOD FOR PAYING FOR GOODS AND/OR SERVICES
PROCÉDÉ DE PAIEMENT DE BIENS ET/OU DE SERVICES

(30) Priorität: 07.07.2022 DE 102022002474
(43) Veröffentlichungstag der Anmeldung: 13.11.2024
(73) Patentinhaber: Mercedes-Benz Group AG, 70372 Stuttgart (DE)
(72) Erfinder: GERBAN, Mark, 22307 Hamburg (DE)
(74) Vertreter: Novagraaf Group
(86) Internationale Anmeldenummer: PCT/EP2023/068260
(87) Internationale Veröffentlichungsnummer: WO 2024/008657

(56) Entgegenhaltungen:
- WO-A1-2021/204411
- US-A1- 2018 308 081
- US-A1- 2020 193 411

## Beschreibung

Die Erfindung betrifft ein Verfahren zum Bezahlen von Waren und/oder Dienstleistungen durch einen berechtigten Nutzern einer Mobilfunkeinheit mit einer SIM oder eSIM, nach der im Oberbegriff von Anspruch 1 näher definierten Art.

Den nächstliegenden Stand der Technik bildet hier die WO 2019/147160 A1. Hierin ist ein Verfahren beschrieben, um über eine SIM oder eSIM in einem Mobiltelefon eine Bezahlung vornehmen zu können.

Die US 2018 / 0 308 081 A1 beschreibt ein Verfahren zur Fahrerauthentifizierung durch im Fahrzeug verbaute Sensoren. Über diese Sensoren wird der Fahrer und/oder sein Fahrverhalten erkannt. Dabei werden im Wesentlichen Bewegungen des Fahrzeugs oder Fahrers ausgewertet.

Die DE 10 2016 209 380 A1 offenbart ein System zum automatischen Durchführen von Zahlungsvorgängen in einem Fahrzeug. Dazu werden Zahlungsinformation eines Benutzers erfasst und in einem Zahlungsinformationsspeicher hinterlegt. Zudem wird eine Schnittstelle der Bezahlvorrichtung auf das Eingehen eines Zahlungssignals überwacht, wobei das Zahlungssignal wenigstens einen Zahlungsempfänger und einen zu zahlenden Betrag umfasst. Ferner wird eine Autorisierung der Zahlung des zu zahlenden Betrags an den Zahlungsempfänger vorgenommen und die Zahlung des zu zahlenden Betrags an den Zahlungsempfänger mittels der in dem Zahlungsinformationsspeicher hinterlegten Zahlungsinformation über eine erste Kommunikationsverbindung angewiesen, wenn die Zahlung autorisiert wurde.

Die DE 10 2020 204 981 B4 beschreibt die Erzeugung einer eindeutigen Nutzeridentifikation in einem Fahrzeug. Dazu werden biometrische Daten verwendet. Die erzeugte Identifikation kann dann mit einer Mobilfunk-Identifikationsnummer in einem Kommunikationsmodul des Fahrzeugs sowie fahrzeugspezifischen Daten verknüpft werden.

Aus der DE 10 2018 207 161 B4 ist ebenfalls die Erzeugung einer eindeutigen Nutzeridentifikation aus biometrischen Daten in einem Fahrzeug bekannt. Diese wir dort zum Erstellen eines Telekommunikationsprofils genutzt.

Typischerweise ist es so, dass Händler eine Bezahlung über eine SIM oder eSIM so nicht akzeptieren bzw. nicht die erforderliche Infrastruktur haben, um derartige Bezahlungen, welche dann typischerweise über den Mobilfunkanbieter abgerechnet werden, anzubieten. Die genannte Schrift beschreibt daher ein Verfahren, um bei einem Bezahlserviceanbieter eine virtuelle Kreditkarte oder einen virtuelles Token zu erzeugen, welches im Anschluss mit der SIM oder eSIM gekoppelt werden kann, um so die Bezahlung vorzunehmen. Die Voraussetzung für eine funktionierende Bezahlung ist es dabei lediglich, dass der Nutzer sich auf seinem Smartphone entsprechend authentifiziert hat, indem er sich beispielsweise in die für das Bezahlen genutzte Applikation eingeloggt hat, oder falls diese dauerhaft aktiviert ist, sich entsprechend bei seinem Smartphone authentifiziert hat, beispielsweise über eine PIN, ein Entsperren des Smartphones über eine biometrische Erkennung oder dergleichen. Der Nachteil besteht nun darin, dass jeder, der über das Smartphone verfügt, mit diesem Smartphone bezahlen kann, solange er beispielsweise die PIN oder das Login kennt. Die Anforderungen an die Sicherheit sind hier also vergleichsweise gering.

Ferner ist es aus dem Stand der Technik bekannt, dass aus einem Fahrzeug heraus bezahlt werden kann. In diesem Zusammenhang kann beispielsweise auf die EP 3 931 782 A1 bzw. ihr internationales Pendant, die WO 2021/204411 A1 verwiesen werden.

Darüber hinaus kennt der Stand der Technik auch die Möglichkeit aus einem Fahrzeug heraus über eine eSIM zu bezahlen, wofür auf die US 2020/0193411 A1 verwiesen wird. Hierbei ist es so, dass eine Zuordnung zu dem jeweiligen Nutzer anhand seines Sitzplatzes innerhalb des Fahrzeugs beispielsweise über eine Kamera erfolgt, bevor dieser dann mit seinem jeweiligen mobilen Endgerät, wie beispielsweise einem Smartphone, bezahlen kann.

Auf der einen Seite besteht nun also basierend auf dem diskutierten Stand der Technik der Wunsch, eine Bezahlung aus einem Fahrzeug heraus vornehmen zu können. Andererseits bestehen bei der Verwendung von virtuellen Bezahlkarten oder virtuellen Token, welche an eine SIM oder eSIM gekoppelt sind, die im Rahmen des eingangs diskutierten Standes der Technik geschilderten Sicherheitsbedenken.

Die Aufgabe der hier vorliegenden Erfindung besteht deshalb darin, eine verbesserte Möglichkeit zur Bezahlung von Waren und/oder Dienstleistungen über eine SIM oder eSIM aus einem Fahrzeug heraus anzugeben.

Diese Aufgabe wird durch ein Verfahren mit den Merkmalen im Anspruch 1, und hier insbesondere im kennzeichnenden Teil des Anspruchs 1, gelöst. Vorteilhafte Ausgestaltungen und Weiterbildungen der erfindungsgemäßen Lösung ergeben sich dabei aus den hiervon abhängigen Unteransprüchen.

Bei dem erfindungsgemäßen Verfahren wird, vergleichbar wie im eingangs genannten Stand der Technik, eine SIM oder eSIM in einer Mobilfunkeinheit eines berechtigen Nutzers verwendet, welche mit einer über einen Bezahlserviceanbieter erzeugten virtuellen Bezahlkarte oder einem virtuellen Bezahltoken gekoppelt wird.

Das erfindungsgemäße Verfahren verwendet dabei eine Mobilfunkeinheit, welche in das Fahrzeug integriert ausgebildet ist. Eine solche Integration der Mobilfunkeinheit in das Fahrzeug bedeutet dabei im Sinne der Erfindung, dass die Mobilfunkeinheit ein fester Bestandteil des Fahrzeugs ist und dementsprechend an ein Bediensystem und die Sensorik eines Fahrzeugs fest angekoppelt wird. Fest im Sinne der Erfindung soll dabei beschreiben, dass es sich eben nicht um ein über Software oder eine Dockingstation eingekoppeltes Smartphone oder dergleichen handelt, sondern tatsächlich um eine Mobilfunkeinheit, welche Teil der Fahrzeugelektronik ist und typischerweise nicht von dem Nutzer in einen Bereich außerhalb des Fahrzeugs mitgeführt wird.

Diese in das Fahrzeug integrierte Mobilfunkeinheit wird nun genutzt, um einen nutzerbezogenen Parametersatz, welcher zumindest eine User-ID des Nutzers beinhaltet, entsprechend zu ermitteln. Anders als im Stand der Technik wird dieser Parametersatz, welcher beispielsweise ein Vektor unterschiedlicher Parameter sein kann, also fahrzeugseitig ermittelt, über einen mit dem Fahrzeug in Kommunikationsverbindung stehenden fahrzeugexternen Server des Fahrzeugherstellers, welcher typischerweise als Vehicle Backend bezeichnet wird. Der ermittelte Parametersatz wird von diesem Server an den Mobilfunkanbieter übertragen. Zusätzlich wird von dem Fahrzeug, in welches die Mobilfunkeinheit integriert ausgeführt ist, ein fahrzeugbezogener Parametersatz ermittelt, welcher nutzerspezifisch ist, also sowohl das Fahrzeug als auch den Nutzer entsprechend berücksichtigt. Dieser Parametersatz kann beispielsweise eine Fahrzeugidentifikationsnummer beinhalten, welche auf dem fahrzeugexternen Server gleichzeitig mit einer Nutzeridentifikation gekoppelt ist, wenn der Nutzer dementsprechend der Besitzer des Fahrzeugs ist oder als Nutzer des Fahrzeugs bekannt bzw. hinterlegt ist. Auch dieser nutzerspezifische fahrzeugbezogene Parametersatz wird nun an den Mobilfunkanbieter übermittelt und von diesem mit der SIM oder eSIM der Mobilfunkeinheit des Fahrzeugs gekoppelt.

Bei der Bezahlung wird nun, ähnlich wie im eingangs genannten Stand der Technik, die virtuelle Bezahlkarte oder das virtuelle Bezahltoken verwendet. Zugleich, und dies ist der entscheidende sicherheitstechnische Vorteil, werden die mit der SIM oder eSIM gekoppelten Parametersätze mit den diesen entsprechenden Parametersätzen beim Mobilfunkanbieter und/oder auf dem fahrzeugexternen Server des Fahrzeugherstellers gespeicherten Parametersätzen verglichen. Dieser Vergleich der einerseits mit der SIM oder eSIM gekoppelten Parametersätze und der unabhängig hiervon beim Mobilfunkanbieter und/oder auf dem fahrzeugexternen Server des Fahrzeugherstellers gespeicherten Parametersätze dient dann zur Authentifizierung des Nutzers, um so die Bezahlung und die Zuordenbarkeit zu dem die Bezahlung ausführenden Nutzer sehr zuverlässig und sicher auszugestalten.

Gemäß einer sehr vorteilhaften Weiterbildung des erfindungsgemäßen Verfahrens kann es dabei vorgesehen sein, dass bei der Bezahlung eine Kommunikationsverbindung zwischen der Mobilfunkeinheit und dem Mobilfunkanbieter und/oder dem fahrzeugexternen Server aufgebaut wird, um die mit der SIM oder eSIM gekoppelte virtuelle Bezahlkarte oder das virtuelle Bezahltoken an die Mobilfunkeinheit zu übertragen und die damit gekoppelten Parametersätze mit den entsprechenden beim Mobilfunkanbieter und/oder auf dem fahrzeugexternen Server des Fahrzeugherstellers gespeicherten Parametersätzen zu vergleichen, um den Nutzer zu authentifizieren. Die Authentifizierung kommt hier also mehr oder weniger zeitgleich mit der Übertragung der virtuellen Bezahlkarte oder des virtuellen Bezahltokens zum Tragen, sodass dem Anbieter der Waren und/oder Dienstleistungen bei der Bezahlung die bereits authentifizierten zur Bezahlung erforderlichen Daten übermittelt werden. Hierdurch ist es möglich eine Bezahlung direkt vorzunehmen, sodass der Anbieter der Waren und/oder Dienstleistungen die Bezahlung sehr einfach und effizient abwickeln kann, ohne seinerseits bezüglich der Authentifizierung aktiv werden zu müssen.

Gemäß einer sehr vorteilhaften Alternative hierzu kann es auch vorgesehen sein, dass die virtuelle Bezahlkarte oder das virtuelle Token sowie die Parametersätze bei der Kopplung mit der SIM oder eSIM auf dieser gespeichert werden. Damit liegen die gesamten zur Bezahlung notwendigen Information auf der SIM oder eSIM vor, sodass dieses Szenario auch dann funktioniert, wenn die Mobilfunkeinheit während des Bezahlvorgangs keine Anbindung an das Internet zur Verfügung hat. Dabei lassen sich verschiedene virtuelle Bezahlkarten und/oder virtuelle Bezahltoken entsprechend speichern, um beispielsweise für verschiedene Bezahlvorgänge eingesetzt zu werden. Ferner ist es auch denkbar, dass lediglich ein Bezahltoken bzw. eine virtuelle Bezahlkarte generiert und für mehrere verschiedene Bezahlvorgänge verwendet wird. Gemäß einer sehr vorteilhaften Weiterbildung können die virtuelle Bezahlkarte oder das virtuelle Bezahltoken und die Parametersätze dabei mit einem Ablaufdatum versehen werden, sodass sie beispielsweise aus Sicherheitsgründen eine gewisse Zeit nach ihrer Generierung automatisch ablaufen und nicht mehr verwendet werden können.

Dieser Vorgang der Speicherung hat dabei, wie oben bereits erwähnt, den Vorteil, dass die Bezahlung dann auch ohne Mobilfunkanbindung der Mobilfunkeinheit an das Internet möglich ist. Es kann bei auf der SIM oder eSIM gespeicherten Daten bei der Bezahlung so sein, dass die gekoppelte virtuelle Bezahlkarte oder das virtuelle Bezahltoken und die damit gekoppelten Parametersätze an den Anbieter der Waren und/oder Dienstleistungen übertragen werden. Der Anbieter der Waren oder Dienstleistungen, beispielsweise ein Händler, eine Tankstelle, eine Mautstation, eine Fähre oder dergleichen, initiiert dann direkt - oder mittelbar über den Bezahlserviceanbieter - den Vergleich der ihm übermittelten Parametersätze mit den entsprechenden beim Mobilfunkanbieter und/oder auf dem fahrzeugexternen Server des Fahrzeugherstellers gespeicherten Parametersätzen vor. Ein solches Verfahren wird auch als 3-D Secure bezeichnet, da hier mehrere Parteien und unterschiedliche Datenwege zur Authentifizierung eingesetzt werden. Initiiert bedeutet in diesem Zusammenhang, dass der Anbieter der Waren und/oder Dienstleistungen diesen Vergleich anstößt, vorzugsweise über den Bezahlserviceanbieter als Vermittler. Dies hat für den Anbieter der Waren und/oder Dienstleistungen den entscheidenden Vorteil, dass dieser lediglich über seine herkömmlichen Kommunikationskanäle, welche er mit dem Bezahlserviceanbieter, beispielsweise einer Kreditkartenfirma oder dergleichen, ohnehin hat, kommunizieren muss. Damit können alle erforderlichen Vorgänge beim Anbieter der Waren und/oder Dienstleistungen über dessen herkömmliche Hardware und/oder Kommunikationskanäle abgewickelt werden, sodass dieser keine weiteren Anforderungen hat, als er beim Einsatz von 3-D Secure ohnehin hat.

Eine weitere sehr vorteilhafte Ausgestaltung des Verfahrens gemäß der Erfindung sieht es ferner vor, dass von Fahrzeugsensoren erfasste Daten zu dem bzw. über den Nutzer in den nutzerbezogenen Parametersatz eingehen. Dies erhöht die Sicherheit weiter, da die Sensoren eines Fahrzeugs verschiedene Werte über den Nutzer erfassen können, welche dementsprechend dem fahrzeugexternen Server des Fahrzeugherstellers bekannt sind und damit zur Verbesserung der Sicherheit der Authentifizierung in den nutzerbezogenen Parametersatz, beispielsweise einen mehrdimensionalen Vektor, eingehen können.

Der nutzerbezogene Parametersatz kann dabei gemäß einer sehr vorteilhaften Weiterbildung zumindest biometrische Daten, Name, E-Mailadresse, Bankverbindung, Telefonnummer, Fahrverhalten, Sitzeinstellungen, Daten aus dem Bereich der Fahrzeugzugangsberechtigung, der Fahrberechtigung und/oder Körperdaten, welche beispielsweise über Sensoren im Sitz oder Kameras erfasst werden, umfassen. Diese Daten können dabei einzeln, in Kombination oder als ausgewählte Gruppe der genannten Daten in einer Kombination zueinander den nutzerbezogenen Parametersatz ausbilden oder Teil dieses nutzerbezogenen Parametersatzes sein. Der Vorteil, wenn über die Fahrzeugsensoren erfasste Daten mit einbezogen werden, besteht darin, dass einerseits die Datenerfassung relativ einfach ist, und dass diese Daten andererseits eine hohe Sicherheit gewährleisten. Verfügt das Fahrzeug beispielsweise über eine biometrisch gesteuerte Zugangsberechtigung, welche anhand eines Fingerabdrucks, einer Iriserkennung, einer Sprachanalyse und/oder dergleichen die Zugangsberechtigung für den Nutzer regelt, dann sind diese Daten ohnehin erfasst und bekannt und können für den nutzerbezogenen Parametersatz herangezogen werden. Auch andere Arten der Zugangsberechtigung, beispielsweise indem eine NFC Verbindung zu einem zugangsberechtigten Smartphone, einer Smartwatch, einem Smartring oder dergleichen aufgebaut wird, lassen sich nutzen. Alleine die Tatsache, dass die Person, welche die in das Fahrzeug integrierte Mobilfunkeinheit später zum Bezahlen nutzt, eine Zugangsberechtigung zu dem Fahrzeug aufweist, hat schon einen relativ hohen Wert bezüglich der Sicherheit der Authentifizierung.

Über weitere Parameter bzw. Daten wie beispielsweise das Fahrverhalten oder die Sitzeinstellung lässt sich dann, insbesondere über den fahrzeugexternen Server des Fahrzeugherstellers, nochmals bestätigen, dass derjenige Nutzer, der die Zugangsberechtigung und die Fahrberechtigung zu dem Fahrzeug hatte, auch tatsächlich derjenige ist, der das Fahrzeug verwendet, weil seine typischen Sitzeinstellungen, sein typisches Fahrverhalten und dergleichen erkannt worden sind.

Die nutzerspezifischen fahrzeugbezogenen Parameter können dabei gemäß einer sehr günstigen Ausgestaltung des erfindungsgemäßen Verfahrens zumindest eine Fahrzeugidentifikationsnummer und/oder die im Fahrzeug verfügbare Sensorkonfiguration umfassen. Die Fahrzeugidentifikationsnummer ist ein eindeutiges Kennzeichen für das Fahrzeug und wird international mit der Abkürzung VIN (Vehicle Identification Number) abgekürzt. Darüber hinaus haben verschiedene Fahrzeuge heutzutage unterschiedliche Sensoren verbaut, sodass auch die Konfiguration der verfügbaren Sensoren ein geeigneter Parameter zur Identifikation des Fahrzeugs oder zumindest zur Unterscheidung verschiedener Fahrzeuge ermöglicht. Darüber hinaus ist es so, dass diese Sensorkonfiguration, für den Fall, dass in den nutzerbezogenen Parametern entsprechende Sensordaten zum Erstellen des Parametersatzes verwendet worden sind, diese Sensoren in dem entsprechenden Fahrzeug auch verfügbar sein müssen, da ansonsten eine Authentifizierung nicht sinnvoll möglich ist. Umfasst der nutzerbezogene Parametersatz beispielsweise das Körpergewicht des Nutzers, dann erfordert dies auch eine Möglichkeit, das Körpergewicht zu erfassen. Dies kann beispielsweise über einen entsprechenden Sensor im Sitz des Fahrzeugs erfolgen. Ist dieses Gewicht also nun Teil des nutzerbezogenen Parametersatzes einerseits und die Sensorkonfiguration im nutzerspezifischen Fahrzeug bezogenen Parametersatz zeigt andererseits an, dass ein zum Erfassen des Gewichts benötigter Sensor nicht vorhanden ist, kann dies bereits ein starkes Indiz auf einen potenziellen Missbrauch sein, welcher das Verweigern der Authentifizierung nach sich ziehen könnte.

Eine sehr vorteilhafte Ausgestaltung des erfindungsgemäßen Verfahrens sieht es nun außerdem vor, dass die virtuelle Bezahlkarte oder das virtuelle Bezahltoken als virtuelle Bezahlkarte oder virtuelles Bezahltoken mit Kryptogramm erstellt und übermittelt wird. Beispielsweise eine solche virtuelle Bezahlkarte mit Kryptogramm stellt eine Erhöhung der Sicherheit dar, da alleine mit den Daten der virtuellen Bezahlkarte so eine Bezahlung und damit ein Missbrauch nicht möglich ist, sondern dass immer die Kombination mit dem entsprechenden Kryptogramm notwendig ist, um die Sicherheit zu gewährleisten. Dies ist grundlegend bei herkömmlichen Methoden aus dem Stand der Technik bekannt und erhöht speziell in diesem Zusammenhang mit der Bezahlung aus dem Fahrzeug heraus die Sicherheit nochmals weiter.

Gemäß einer außerordentlich günstigen Weiterbildung des erfindungsgemäßen Verfahrens ist es nun ferner so, dass der Vergleich der Parametersätze zeitliche Veränderungen in den einzelnen Parametern der Parametersätze über Methoden des maschinellen Lernens berücksichtigt. So kann beispielsweise bei einem aus einem mehrdimensionalen Vektor bestehenden Parametersatz der eine oder andere Parameter seine Größe im Laufe der Zeit ändern. Dies gilt insbesondere dann, wenn Daten zum Nutzerverhalten in den Parametersatz einfließen. So kann sich beispielsweise das Fahrverhalten, die eingestellte Sitzposition oder dergleichen im Laufe der Zeit verändern, weil der Nutzer hier entsprechende Anpassungen vornimmt. Über Methoden des maschinellen Lernens können diese Anpassungen - oder auch über die Zeit auftretende Veränderungen beispielsweise beim Gewicht des Nutzers oder dergleichen - erkannt und entsprechend berücksichtigt werden. Diese Parameter lassen sich über maschinelles Lernen entsprechend nachführen, sodass im Falle eines Vergleichs das den Vergleich durchführende System entsprechend trainiert sein kann, einen Parametersatz zur Authentifizierung als gleich einzustufen, auch wenn bei bestimmten Parametern, bei denen dies prinzipbedingt möglich ist, kleinere Veränderungen aufgetreten sind. Hierdurch wird das unnötige Verweigern einer Authentifizierung aufgrund kleiner Abweichungen in einzelnen Daten des Parametersatzes effizient verhindert und das System kann dennoch zuverlässig feststellen, ob beispielsweise das sich leicht verändernde Fahrverhalten eines Nutzers als temporäre oder schleichende Veränderung aufgetreten ist und die Nutzung des Fahrzeugs dennoch diesem Nutzer grundsätzlich zugeordnet werden kann.

Gemäß einer sehr vorteilhaften Weiterbildung dieses Verfahrens ist es dabei möglich, dass einzelne Parameter beim Vergleichen der Parametersätze unterschiedlich gewichtet werden. Hierdurch wird es beispielsweise möglich, eindeutige Parameter höher zu gewichten als Parameter, welche einer kontinuierlichen oder temporären Veränderung unterliegen können. Auch hierdurch lässt sich die Sicherheit der Authentifizierung in der gewünschten Art und Weise anpassen. Die Gewichtung lässt sich jedoch auch anders herum vornehmen, sodass beispielsweise Parameter, die in dem Parametersatz bzw. Vektor das Nutzerverhalten widerspiegeln, höher bewertet werden. Hintergrund dieser Überlegung kann es sein, dass das Imitieren des Nutzerverhaltens deutlich schwieriger ist, als wenn Daten wie Name, Telefonnummer und dergleichen des Nutzers durch einen Dritten erbeutet und für das hier beschriebene Verfahren widerrechtlich eingesetzt werden.

Darüber hinaus ist es möglich, über den Einsatz solcher Methoden des maschinellen Lernens bei der Verwendung von das Nutzerverhalten charakterisierenden Parametern auf Abweichungen sinnvoll zu reagieren. So kann das System beispielsweise darauf trainiert sein, im Rahmen der Anpassung durch maschinelles Lernen festgestellte Abweichungen und aktuell aufgetretene Abweichungen, welche im Rahmen solcher bereits festgestellten Abweichungen liegen, als zulässige Abweichungen zu erkennen, um so im Falle des Vergleichs der Parametersätze diese als "gleich" zu bewerten, um so die Authentifizierung frei zu geben. Kommt es nun zu einer stärkeren Abweichung als es ansonsten typischerweise festgestellt wird, dann kann eine Situation vorliegen, in welcher beispielsweise jemand anderes das Fahrzeug fährt und eben ein völlig anderes Fahrverhalten an den Tag legt oder indem beispielsweise der berechtigte Nutzer das Fahrzeug fährt, aber beispielsweise unter Drogeneinfluss steht oder dergleichen. Für diesen Fall kann es dann bei dem erfindungsgemäßen Verfahren vorgesehen sein, dass zum Schutz bzw. Selbstschutz des berechtigten Nutzers die Authentifizierung verweigert oder zumindest der Maximalbetrag für die Bezahlung beschränkt wird, sodass beispielsweise der Nutzer unter Drogeneinfluss nicht in der Lage ist, große Geldbeträge auszugeben oder ein nicht berechtigter Nutzer daran gehindert wird, auf Kosten des berechtigten Nutzers teure Waren und/oder Dienstleistungen zu bezahlen.

Wie oben bereits erwähnt lässt sich die virtuelle Bezahlkarte oder das virtuelle Bezahltoken entsprechend speichern oder, im Falle einer vorhandenen Internetanbindung, auch im Falle des Bezahlens auf die Mobilfunkeinheit übertragen. In der Praxis kann es dabei vorgesehen sein, dass beispielsweise eine virtuelle Bezahlkarte oder ein virtuelles Bezahltoken genutzt wird, welches für mehrere Zahlvorgänge zum Einsatz kommt. Zur Erhöhung der Sicherheit kann es dann vorgesehen sein, dass dieses zeitlich periodisch entsprechend erneuert wird, um eine Verifikation der entsprechenden Parametersätze zumindest von Zeit zu Zeit zu gewährleisten. Dies lässt sich vergleichbar auch bei der Kopplung und Aufrechterhaltung der virtuellen Bezahlkarte oder des virtuellen Bezahltokens beim Mobilfunkanbieter und/oder auf dem fahrzeugexternen Server des Fahrzeugherstellers so handhaben, also auch für den Fall der vorhandenen Internetanbindung während des Bezahlens. Eine aus sicherheitstechnischen Gründen zur bevorzugende Alternative hierzu, welche jedoch den Aufwand entsprechend erhöht, ist es, die virtuelle Bezahlkarte oder das virtuelle Bezahltoken für jeden Bezahlvorgang zu erneuern. Damit wird also für jeden angeforderten Bezahlvorgang eine entsprechende virtuelle Bezahlkarte oder ein virtuelles Bezahltoken nach dem oben beschriebenen Verfahren erzeugt und verwendet. Diese Art der Vorgehensweise erfordert entweder eine Internetanbindung der Mobilfunkeinheit während des Bezahlens oder kann alternativ dazu auch, wie es oben bereits angedeutet worden ist, dadurch gelöst werden, dass auf der SIM oder eSIM verschiedene virtuelle Bezahlkarten oder virtuelle Bezahltoken gespeichert werden. So können beispielsweise drei oder vier Karten oder Token auf der SIM oder eSIM gespeichert werden, sodass für diese drei oder vier Bezahlvorgänge die Möglichkeit besteht, diese ohne eine Internetanbindung abzuwickeln, bevor dann, sobald wieder eine Internetanbindung besteht, dieser "Vorrat" an möglichen Bezahlvorgängen quasi wieder aufgefüllt wird.

Wie nun schon mehrfach erwähnt lässt sich sowohl der Mobilfunkanbieter als auch der fahrzeugexterne Server des Fahrzeugherstellers nutzen, um den Vergleich vorzunehmen. In der Praxis reicht es im Wesentlichen aus, wenn diese Kommunikation bezüglich des Vergleichs mit dem Mobilfunkanbieter erfolgt, welcher das virtuelle Bezahltoken bzw. die virtuelle Bezahlkarte vom Bezahlserviceanbieter entsprechend erhält und an die SIM oder eSIM koppelt. Um alternativ oder zusätzlich den fahrzeugexternen Server des Fahrzeugherstellers diesen Vergleich vornehmen zu können, kann es gemäß einer sehr günstigen Ausgestaltung des erfindungsgemäßen Verfahrens vorgesehen sein, dass die virtuelle Bezahlkarte oder das virtuelle Bezahltoken vom Mobilfunkanbieter - oder parallel zur Übermittlung an den Mobilfunkanbieter vom Bezahlserviceanbieter - an den fahrzeugexternen Server weitergeleitet und dort gespeichert wird. Der Bezahlserviceanbieter kann also die virtuelle Bezahlkarte bzw. das virtuelle Token unmittelbar parallel sowohl an den Mobilfunkanbieter als auch den fahrzeugexternen Server weiterreichen. Alternativ dazu kann er dies auch lediglich an den Mobilfunkanbieter übermitteln, welcher es dann gemäß dieser vorteilhaften Ausgestaltung des erfindungsgemäßen Verfahrens seinerseits an den fahrzeugexternen Server weitergibt. Dies schafft in jedem Fall die Möglichkeit den Vergleich entweder mit dem Mobilfunkanbieter oder dem fahrzeugexternen Server, und hier also quasi mit dem Fahrzeughersteller, vorzunehmen. Dies eröffnet zusätzliche Möglichkeiten wenn beispielsweise eine dieser Institutionen vorübergehend nicht erreichbar ist oder dergleichen. Außerdem ermöglicht es sowohl dem Mobilfunkanbieter einerseits als auch dem Fahrzeughersteller andererseits als Servicedienstleister in Erscheinung zu treten und die Bezahlung letztlich für den Nutzer abzuwickeln. Dies kann aus wirtschaftlicher Sicht auch eine Frage der Risikoabschätzung sein, sodass entweder der Mobilfunkanbieter oder der Fahrzeughersteller die Bezahlung der über die SIM oder eSIM bezahlten Beträge übernimmt und dann die angefallenen Beträge beim Nutzer einfordert.

Weitere vorteilhafte Ausgestaltungen des erfindungsgemäßen Verfahrens ergeben sich außerdem aus dem Ausführungsbeispiel, welches nachfolgend unter Bezugnahme auf die Figur näher beschrieben ist.

Die einzige beigefügte Figur zeigt dabei eine schematische Darstellung eines Systems zur Abwicklung des erfindungsgemäßen Verfahrens.

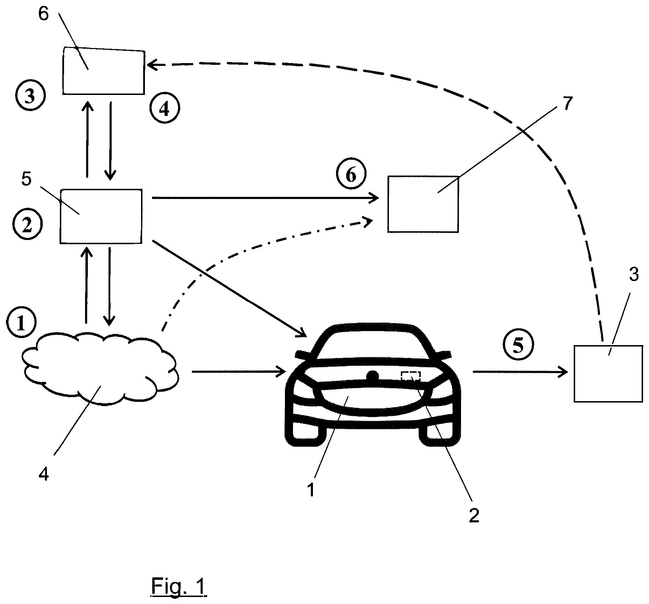

In der Darstellung der einzigen Figur 1 ist ein Fahrzeug 1 zu erkennen, in welchem eine mit 2 bezeichnete Mobilfunkeinheit verbaut ist, die zur Bezahlung von Waren und/oder Dienstleistungen bei einem Anbieter 3 für Waren und/oder Dienstleistungen über ihre integrierte SIM oder eSIM genutzt werden soll.

Ein hier als Cloud dargestellter fahrzeugexterner Server 4 steht dabei in Verbindung mit dem Fahrzeug 1 bzw. seiner Mobilfunkeinheit 2 und stellt beispielsweise eine herstellereigene Applikation zur Verfügung, in welchem ein Nutzer des Fahrzeugs 1 einen entsprechenden Account unterhält, welcher mit der SIM/eSIM der Mobilfunkeinheit 2 in seinem Fahrzeug 1 gekoppelt ist. Zwischen dem fahrzeugexternen Server 4 des Fahrzeugherstellers und einem Mobilfunkanbieter 5 entsteht dabei eine weitere Kommunikationsverbindung. Der Mobilfunkanbieter 5 ist seinerseits in einer Kommunikationsverbindung mit einem Bezahlserviceanbieter 6, beispielsweise einem Kreditkartenunternehmen oder ähnlichem. Darüber hinaus steht der Mobilfunkanbieter 5 oder optional ergänzend oder alternativ dazu der fahrzeugexterne Server 4 und damit der Fahrzeughersteller mit einer Bank 7 des Nutzers des Fahrzeugs 1 als Kunde in Verbindung, ebenso wie mit dem Fahrzeug 1 bzw. dessen Mobilfunkeinheit 2.

Zur Erläuterung des Ablaufs sind in der Figur 1 außerdem sechs einzelne Verfahrensschritte durch die jeweils eingekreisten Ziffern 1 bis 6 symbolisch angedeutet. Im ersten Schritt, welcher im Wesentlichen im Ökosystem des Fahrzeugherstellers und damit auf dem fahrzeugexternen Server 4, gegebenenfalls in Kommunikationsverbindung mit dem Fahrzeug 1 bzw. seiner Mobilfunkeinheit 2 und dem Nutzer des Fahrzeugs 1 durchgeführt wird, werden erste Parameter zusammengestellt, welche auf dem fahrzeugexternen Server 4 typischerweise ohnehin vorliegen. Diese Parameter können beispielsweise den Namen des Nutzers, seine E-Mailadresse, biometrische Daten des Nutzers, sein Fahrverhalten, seine Sitzeinstellungen, Informationen zu seiner Bankverbindung, seine Telefonnummer und dergleichen umfassen. Diese Daten bilden dann einen nutzerbezogenen Parametersatz oder zumindest einen Teil eines solchen nutzerbezogenen Parametersatzes und können im weiteren Verlauf für die Authentifizierung herangezogen werden.

Außerdem liegt auf dem fahrzeugexternen Server 4 typischerweise eine Verbindung der Daten des Nutzers mit den entsprechenden Daten seines Fahrzeugs 1 vor, sodass fahrzeugbezogene Parameter wie beispielsweise die Fahrzeugidentifikationsnummer, eine Sensorkonfiguration des Fahrzeugs und dergleichen mit dem Account des Nutzers und damit mit dem nutzerbezogenen Parametersatz verknüpft werden können. Diese Informationen lassen sich nutzen, um die physikalische Einheit des Fahrzeugs 1 und der Mobilfunkeinheit 2 entsprechend zu identifizieren. Insbesondere wenn ein Nutzer mehrere verschiedene Fahrzeuge 1 besitzt, ist es entscheidend, die Fahrzeugidentifikationsnummer zu kennen, um eine eindeutige Zuordnung vornehmen zu können und im Falle einer solchen fehlenden eindeutigen Zuordnungen die Zahlungen gegebenenfalls blockieren zu können. Weitere Parameter, welche von den Sensoren des Fahrzeugs 1 gesammelt werden, können ebenfalls Verwendung finden, beispielsweise übertragene Daten der Telemetrie, um beispielsweise das Fahrverhalten des Nutzers zu erfassen und ergänzend heranzuziehen, um diesen möglichst eindeutig zu identifizieren.

Damit entsteht nun einerseits ein nutzerbezogener Parametersatz und andererseits ein fahrzeugbezogener Parametersatz, welcher insbesondere durch die Verknüpfung mit den Daten des Nutzers zu einem nutzerspezifischen fahrzeugbezogenen Parametersatz führt. Diese Parametersätze werden nun in einen zweiten Schritt an den Mobilfunkanbieter 5 übertragen, welcher die Parametersätze mit einer SIM oder eSIM des Nutzers in der Mobilfunkeinheit 2 seines Fahrzeugs 1 koppelt. Dies kann einerseits periodisch erfolgen oder auch immer nur dann, wenn es in einem der Parametersätze zu einer Veränderung gekommen ist, sodass getriggert durch diese Veränderung der fahrzeugexterne Server 4 den entsprechenden Parametersatz zur Erneuerung an den Mobilfunkanbieter 5 sendet.

Basierend auf den erhaltenen Daten kann der Mobilfunkanbieter 5 nun außerdem ein Risikoprofil des entsprechenden Nutzers anlegen, welches typischerweise benötigt wird, da die Zahlungen auf Kreditbasis abgewickelt werden. Dies bedeutet, dass der Mobilfunkanbieter 5 die Kosten zuerst einmal übernimmt, und sie beispielsweise auf einer zeitlich periodischen Basis seinem Kunden in Rechnung stellt, was es für den Mobilfunkanbieter 5 erforderlich macht, das Risiko einschätzen zu können, ob diese Rechnung letztendlich auch bezahlt werden wird. Alternativ zu dem Mobilfunkanbieter 5 könnte an dieser Stelle auch der fahrzeugexterne Server 4 und damit letztlich der Fahrzeughersteller, welcher seinen Kunden ja ebenfalls relativ gut kennt, diese Risikoeinschätzung mit übernehmen oder kann insbesondere direkt die Rolle desjenigen einnehmen, welcher die Bezahlungen vorerst auf Kreditbasis ausgleicht und dann gegenüber seinem Kunden weiterberechnet. Hier besteht also die Möglichkeit für den Fahrzeughersteller bezüglich der Bezahlungsabwicklung die Rolle des Mobilfunkanbieters 5 ganz oder teilweise zu übernehmen, wenn dies gewünscht ist.

Im weiteren Verlauf erfolgt dann in dem hier mit drei bezeichneten Schritt eine Anfrage des Mobilfunkanbieters 5 an einen Bezahlserviceanbieter 6, beispielsweise eine Kreditkartenfirma. Die Anfrage richtet sich darauf, eine virtuelle Bezahlkarte oder ein virtuelles Bezahltoken mit oder ohne Kryptogramm, vorzugsweise aufgrund der Sicherheitsaspekte mit Kryptogramm, zu erstellen. Dieser Vorgang entspricht soweit dem allgemeinen Stand der Technik.

Im vierten Schritt sendet der Bezahlserviceanbieter 6 diese virtuelle Bezahlkarte bzw. das virtuelle Bezahltoken, insbesondere und bevorzugt mit Kryptogramm, an den Mobilfunkanbieter 5, welcher es mit der SIM oder eSIM und dem nutzerbezogenen sowie dem nutzerspezifischen fahrzeugbezogenen Parametersatz koppelt. Die virtuelle Bezahlkarte oder das virtuelle Bezahltoken kann vorzugsweise außerdem an das Ökosystem des Fahrzeugherstellers, hier also an den fahrzeugexternen Server 4, übermittelt werden, welcher die Daten ebenfalls speichert. Eine virtuelle Bezahlkarte oder ein virtuelles Bezahltoken kann dabei für jeden Bezahlvorgang einzeln erzeugt werden oder es kann periodisch erzeugt bzw. erneuert werden, je nachdem, was für Sicherheitsanforderungen an das System gestellt werden.

Diese Vorgehensweise ermöglicht es dem Nutzer des Fahrzeugs 1 nun für Waren und/oder Dienstleistungen direkt über sein Fahrzeug 1 bezahlen zu können, ohne hierfür eine Kreditkarte oder dergleichen zu benötigen. Da die Anbieter 3 von Waren und/oder Dienstleistungen typischerweise eine Bezahlung über eine SIM oder eSIM jedoch nicht unterstützen, wird dies gelöst, indem die virtuelle Bezahlkarte oder das virtuelle Bezahltoken mit der SIM oder eSIM gekoppelt wird und letztlich zur Bezahlung dient.

Die Bezahlung selbst erfolgt dann im fünften Schritt in der Darstellung der Figur 1, indem beispielsweise, wenn eine Internetanbindung des Fahrzeugs 1 bzw. seiner Mobilfunkeinheit 2 gegeben ist, mit Beginn des Bezahlvorgangs die virtuelle Bezahlkarte oder das virtuelle Bezahltoken von dem Mobilfunkanbieter 5 an die Mobilfunkeinheit 2 übertragen wird. Die mit der SIM oder eSIM gekoppelten Parametersätze werden dann mit den auf den fahrzeugexternen Server 4 gespeicherten Parametersätzen abgeglichen, um letztlich den Nutzer des Fahrzeugs 1 zu authentifizieren. Im fünften Schritt erhält in diesem Szenario der Anbieter 3 der Waren und/oder Dienstleistungen also direkt die authentifizierten Bezahlinformationen, um so die Bezahlung unmittelbar abwickeln zu können.

Eine Alternative für den fünften Schritt kann das sogenannte 3-D Secure-Verfahren darstellen. Dies erfordert nicht zwingend eine Internetanbindung. In diesem Fall ist die virtuelle Bezahlkarte oder das virtuelle Bezahltoken zusammen mit den entsprechenden Parametersätzen auf der SIM oder eSIM der Mobilfunkeinheit 2 gespeichert. Diese Daten werden bei der Bezahlung an den Anbieter 3 der Waren und/oder Dienstleistungen übermittelt. Gemäß des gestrichelten Pfeils nimmt dieser dann Kontakt mit dem Mobilfunkanbieter 5 oder dem fahrzeugexternen Server 4 auf, um seinerseits den Vergleich zur Authentifizierung zu initiieren. Da der Anbieter 3 typischerweise über eine Verbindung zu dem Bezahlserviceanbieter 6, also beispielsweise einer Kreditkartenfirma, verfügt, nutzt er typischerweise und bevorzugt eben diesen Weg, um den Vergleich zu initiieren. Der gestrichelte Pfeil verläuft deshalb vom Anbieter 3 zum Bezahlserviceanbieter 6. Dieser gibt die entsprechende Anfrage dann über die etablierten Kanäle an den Mobilfunkanbieter 5 und/oder den fahrzeugexternen Server 4 weiter, welche im positiven Prüfungsfall dann die Authentifizierung zurückliefern, sodass für den Anbieter 3 der Waren und/oder Dienstleistungen der Bezahlvorgang zuverlässig abgeschlossen werden kann.

Für die Bezahlung kommt dann erstmal, wie bei einem typischen Kreditverfahren, entweder der Mobilfunkanbieter 5 oder der Fahrzeughersteller, hier symbolisiert durch den fahrzeugexternen Server 4, auf. Diese Institutionen nehmen dann mit der Bank 7 des Nutzers des Fahrzeugs 1, also ihres Kunden, Kontakt auf, um dementsprechend die Rechnung durch den Kunden begleichen zu lassen. Dies ist hier entsprechend als Schritt 6 dargestellt und wird in den meisten Szenarien über den Mobilfunkanbieter 5 ausgelöst, kann optional gemäß der strichpunktiert dargestellten Verbindung jedoch auch von dem fahrzeugexternen Server 4 bzw. dem Fahrzeughersteller entsprechend übernommen werden.

Da die Parametersätze, welche beispielsweise als n-dimensionaler Vektor ausgebildet sein können, verschiedene Parameter enthalten können, welche einer kontinuierlichen Veränderung unterworfen sein könnten, beispielsweise das Nutzergewicht, das Fahrverhalten des Nutzers oder dergleichen, kann es sinnvoll sein, beim Vergleich der zu Zahlungszwecken mit der SIM oder eSIM gekoppelten Parametersätze und der auf dem fahrzeugexternen Server 4 und/oder beim Mobilfunkanbieter 5 gespeicherten Parametersätze gewisse Toleranzen, insbesondere bei den hierfür anfälligen Parametern, zu gewähren, bevor die Parametersätze als nicht gleich eingestuft und damit die Authentifizierung verweigert wird. Besonders geeignet, um hier eine zuverlässige Funktionsweise zu ermöglichen, sind dabei Verfahren des maschinellen Lernens. Hierdurch können kontinuierliche Veränderungen, beispielsweise im Fahrverhalten des Nutzers, erfasst werden. Diese Veränderungen sind typischerweise eher klein und können durch das Verfahren des maschinellen Lernens entsprechend nachgeführt werden. Ein solches Verfahren kann dann auch darauf trainiert sein, bei einem Vergleich eines aktuellen Parametersatzes, beispielsweise auf dem fahrzeugexternen Server 4 des Fahrzeugherstellers und einem zur Authentifizierung bei der Bezahlung übermittelten Parametersatz diese Parametersätze als "gleich" einzustufen, auch wenn leichte Abweichungen aufgetreten sind. So kann über die Kenntnisse aus dem Verfahren des maschinellen Lernens beispielsweise erkannt werden, dass das Fahrverhalten des Nutzers sich zwar verändert hat, grundsätzlich jedoch dem von diesem Nutzer bekannten Schema entspricht, sodass also mit sehr hoher Wahrscheinlichkeit davon ausgegangen werden kann, dass tatsächlich der Nutzer das Fahrzeug 1 gefahren hat. Liegen die Abweichungen jedoch über einer während des maschinellen Lernens typischerweise auftretenden Schwelle, dann kann in diesem Zusammenhang auch davon ausgegangen werden, dass die Veränderung so stark ist, dass entweder ein anderer Nutzer das Fahrzeug nutzt, sodass die Authentifizierung verweigert werden sollte. Alternativ dazu wäre es beispielsweise auch denkbar, wie eingangs bereits erwähnt, dass zwar derselbe Nutzer das Fahrzeug 1 bewegt, aber beispielsweise unter Drogeneinfluss steht, also zum Beispiel betrunken ist. In diesem Fall könnte ebenfalls die Authentifizierung verweigert werden.

Um in beiden Fällen für den Fall, dass der Nutzer tatsächlich der berechtigte Nutzer ist, auch wenn dies vom System nicht entsprechend erkannt worden ist, nicht völlig ohne Bezahlmöglichkeit zu lassen, kann es für derartige Fälle auch vorgesehen sein, dass die Bezahlungen auf einen Maximalbetrag beschränkt werden. Dies ermöglicht dem Nutzer auch in gegebenenfalls vorliegenden Ausnahmesituationen noch zumindest kleinere Beträge zu bezahlen, beispielsweise eine gewisse Menge an Benzin tanken zu können oder dergleichen. Gleichzeitig wird für den berechtigten Nutzer das Risiko minimiert, da für den Fall, dass die Bezahlung eben nicht von ihm ausgelöst wurde, der dann entstandene Schaden auf eben diesen Maximalbetrag beschränkt wird.

## Patentansprüche

1. Verfahren zum Bezahlen von Waren und/oder Dienstleitungen durch einen berechtigten Nutzer einer Mobilfunkeinheit (2) mit einer SIM oder eSIM, wobei ein nutzerbezogener Parametersatz an einen der SIM oder eSIM zugeordneten Mobilfunkanbieter (5) übertragen und von diesem mit der SIM oder eSIM gekoppelt wird, wonach der Mobilfunkanbieter (5) eine Anfrage an einen
Bezahlserviceanbieter (6) übermittelt, welcher eine virtuelle Bezahlkarte oder ein virtuelles Bezahltoken erstellt und dem Mobilfunkanbieter (5) übermittelt, wonach der Mobilfunkanbieter (5) die virtuelle Bezahlkarte oder das virtuelle Bezahltoken mit der SIM oder eSIM koppelt,
**dadurch gekennzeichnet, dass**
die Mobilfunkeinheit (2) in einem Fahrzeug (1) integriert ausgebildet ist, wobei der nutzerbezogene Parametersatz von einem mit dem Fahrzeug (1) gekoppelten fahrzeugexternen Server (4) des Fahrzeugherstellers ermittelt und an den Mobilfunkanbieter (5) übertragen wird, wobei ferner ein nutzerspezifischer fahrzeugbezogener Parametersatz von dem fahrzeugexternen Server (4) des Fahrzeugherstellers ermittelt und an den Mobilfunkanbieter (5) übertragen wird, welcher diesen ebenfalls mit der SIM oder eSIM koppelt, wobei bei einer Bezahlung von Waren und/oder Dienstleistungen die mit der SIM oder eSIM gekoppelten Parametersätze mit den entsprechenden beim Mobilfunkanbieter (5) und/oder auf dem fahrzeugexternen Server (4) des Fahrzeugherstellers gespeicherten Parametersätzen verglichen werden, um den Nutzer zu authentifizieren.

2. Verfahren nach Anspruch 1,
**dadurch gekennzeichnet , dass**
bei der Bezahlung eine Kommunikationsverbindung zwischen der Mobilfunkeinheit (2) und dem Mobilfunkanbieter (5) und/oder dem fahrzeugexternen Server (4) aufgebaut wird, um die mit der SIM oder eSIM gekoppelte virtuelle Bezahlkarte oder das virtuelle Bezahltoken zu übertragen und die damit gekoppelten Parametersätze mit den entsprechenden beim Mobilfunkanbieter (5) und/oder auf dem fahrzeugexterne Server (4) des Fahrzeugherstellers gespeicherten Parametersätzen verglichen werden, um den Nutzer zu authentifizieren, wonach einem Anbieter (3) der Waren und/oder Dienstleistungen die authentifizierten zur Bezahlung erforderlichen Daten übermittelt werden.

3. Verfahren nach Anspruch 1,
**dadurch gekennzeichnet , dass**
die virtuelle Bezahlkarte oder das virtuelle Bezahltoken sowie die Parametersätze bei der Kopplung mit der SIM oder eSIM auf dieser gespeichert werden.

4. Verfahren nach Anspruch 3,
**dadurch gekennzeichnet , dass**
bei der Bezahlung die mit der SIM oder eSIM gekoppelte virtuelle Bezahlkarte oder das virtuelle Bezahltoken und die damit gekoppelten Parametersätze an einen Anbieter (3) der Waren und/oder Dienstleistungen übertragen werden, welcher direkt oder über den Bezahlserviceanbieter (6) den Vergleich der ihm übermittelten Parametersätze mit den entsprechenden beim Mobilfunkanbieter (5) und/oder auf dem fahrzeugexterner Server (4) des Fahrzeugherstellers gespeicherten Parametersätzen initiiert.

5. Verfahren nach Anspruch 3 oder 4,
**dadurch gekennzeichnet , dass**
die auf der SIM oder eSIM gespeicherte virtuelle Bezahlkarte oder das virtuelle Bezahltoken sowie Parametersätze mit einem Ablaufdatum versehen werden.

6. Verfahren nach einem der Ansprüche 1 bis 5,
**dadurch gekennzeichnet , dass**
von Fahrzeugsensoren erfasste Daten zu dem Nutzer in den nutzerbezogenen Parametersatz eingehen.

7. Verfahren nach einem der Ansprüche 1 bis 6,
**dadurch gekennzeichnet , dass**
der nutzerbezogene Parametersatz zumindest biometrische Daten, Name, E-MailAdresse, Bankverbindung, Telefonnummer, Fahrverhalten, Sitzeinstellungen, Fahrzeugzugangberechtigungen, Fahrberechtigungen und/oder Körperdaten umfasst.

8. Verfahren nach einem der Ansprüche 1 bis 7,
**dadurch gekennzeichnet , dass**
der nutzerspezifische fahrzeugbezogene Parametersatz zumindest eine Fahrzeugidentifikationsnummer und/oder die im Fahrzeug (1) verfügbar Sensorkonfiguration umfasst.

9. Verfahren nach einem der Ansprüche 1 bis 8,
**dadurch gekennzeichnet , dass**
die virtuelle Bezahlkarte oder das virtuelles Bezahltoken mit Kryptogramm erstellt und übermittelt wird.

10. Verfahren nach einem der Ansprüche 1 bis 9,
**dadurch gekennzeichnet , dass**
der Vergleich der Parametersätze zeitliche Veränderungen in einzelnen Parametern der Parametersätze über Methoden des maschinellen Lernens berücksichtigt.

11. Verfahren nach Anspruch 10,
**dadurch gekennzeichnet , dass**
die einzelnen Parameter beim Vergleich der Parametersätze unterschiedlich gewichtet werden.

12. Verfahren nach Anspruch 10 oder 11,
**dadurch gekennzeichnet , dass**
bei der Verwendung von das Nutzerverhalten charakterisierenden Parametern bei Abweichungen, welche deutlich größer sind als bisher bei der Anpassung durch maschinelles Lernen festgestellten Abweichungen, die Authentifizierung verweigert oder der Maximalbetrag für die Bezahlung beschränkt wird.

13. Verfahren nach einem der Ansprüche 1 bis 12,
**dadurch gekennzeichnet , dass**
die virtuelle Bezahlkarte oder das virtuelle Bezahltoken zeitlich periodisch oder für jeden Bezahlvorgang erneuert wird.

14. Verfahren nach einem der Ansprüche 1 bis 13,
**dadurch gekennzeichnet , dass**
die virtuelle Bezahlkarte oder das virtuelle Bezahltoken vom Mobilfunkanbieter (5) oder parallel zur Übermittlung an den Mobilfunkanbieter (5) vom Bezahlserviceanbieter (6) an den fahrzeugexterner Server (4) des Fahrzeugherstellers weitergeleitet und dort gespeichert wird.

## Claims

1. Method for payment for goods and/or services by an authorized user of a mobile communication unit (2) having a SIM or eSIM, with a user-related parameter set being transmitted to a mobile communication provider (5) associated with the SIM or eSIM and being coupled by the latter to the SIM or eSIM, after which the mobile communication provider (5) sends a request to a payment service provider (6), which creates a virtual payment card or virtual payment token and sends it to the mobile communication provider (5), after which the mobile communication provider (5) couples the virtual payment card or virtual payment token to the SIM or eSIM,
**characterized in that**
the mobile communication unit (2) is integrated into a vehicle (1), the user-related parameter set being determined by a vehicle-external server (4) of the vehicle manufacturer, which is coupled to the vehicle (1), and transmitted to the mobile communication provider (5), with a user-specific vehicle-related parameter set being further determined by the vehicle-external server (4) of the vehicle manufacturer and transmitted to the mobile communication provider (5), which also couples this to the SIM or eSIM, wherein, when paying for goods and/or services, the parameter sets coupled to the SIM or eSIM are compared with the corresponding parameter sets stored at the mobile communication provider (5) and/or on the vehicle-external server (4) of the vehicle manufacturer in order to authenticate the user.

2. Method according to claim 1,
**characterized in that**
during payment, a communication link is established between the mobile communication unit (2) and the mobile communication provider (5) and/or the vehicle-external server (4) in order to transmit the virtual payment card or virtual payment token coupled to the SIM or eSIM, and the parameter sets coupled thereto are compared with the corresponding parameter sets stored at the mobile communication provider (5) and/or on the vehicle-external server (4) of the vehicle manufacturer in order to authenticate the user, after which the authenticated data required for payment are sent to a provider (3) of the goods and/or services.

3. Method according to claim 1,
**characterized in that**
the virtual payment card or virtual payment token, as well as the parameter sets, are stored on the SIM or eSIM when coupled thereto.

4. Method according to claim 3,
**characterized in that**
during payment, the virtual payment card or virtual payment token coupled to the SIM or eSIM and the parameter sets coupled thereto are transmitted to a provider (3) of the goods and/or services, which, directly or via the payment service provider (6), initiates the comparison of the parameter sets sent to it with the corresponding parameter sets stored at the mobile communication provider (5) and/or on the vehicle-external server (4) of the vehicle manufacturer.

5. Method according to claim 3 or 4,
**characterized in that**
the virtual payment card or virtual payment token stored on the SIM or eSIM, as well as parameter sets, are given an expiry date.

6. Method according to any of claims 1 to 5,
**characterized in that**
data relating to the user collected by vehicle sensors are incorporated into the user-related parameter set.

7. Method according to any of claims 1 to 6,
**characterized in that**
the user-related parameter set comprises at least biometric data, name, email address, bank details, telephone number, driving behavior, seat settings, vehicle access permissions, driving permissions and/or body data.

8. Method according to any of claims 1 to 7,
**characterized in that**
the user-specific vehicle-related parameter set comprises at least a vehicle identification number and/or the sensor configuration available in the vehicle (1).

9. Method according to any of claims 1 to 8,
**characterized in that**
the virtual payment card or virtual payment token is created and sent with a cryptogram.

10. Method according to any of claims 1 to 9,
**characterized in that**
the comparison of the parameter sets takes into account temporal changes in individual parameters of the parameter sets using machine learning methods.

11. Method according to claim 10,
**characterized in that**
the individual parameters are weighted differently when comparing the parameter sets.

12. Method according to claim 10 or 11,
**characterized in that**
when using parameters that characterize user behavior, in case of deviations that are significantly larger than those previously identified during the adaptation through machine learning, authentication is refused or the maximum payment amount is limited.

13. Method according to any of claims 1 to 12,
**characterized in that**
the virtual payment card or virtual payment token is renewed periodically or for each payment transaction.

14. Method according to any of claims 1 to 13,
**characterized in that**
the virtual payment card or virtual payment token is forwarded by the mobile communication provider (5) or, in parallel with the transmission to the mobile communication provider (5), by the payment service provider (6) to the vehicle-external server (4) of the vehicle manufacturer and stored there.

## Revendications

1. Procédé de paiement de biens et/ou de services par un utilisateur autorisé d'une unité radio mobile (2) avec une SIM ou une eSIM, dans lequel un jeu de paramètres relatif à l'utilisateur est transmis à un fournisseur radio mobile (5) associé à la SIM ou à l'eSIM et est couplé par celui-ci à la SIM ou à l'eSIM, après quoi le fournisseur radio mobile (5) transmet une demande à un fournisseur de services de paiement (6), lequel crée une carte de paiement virtuelle ou un jeton de paiement virtuel et le/la transmet au fournisseur radio mobile (5), après quoi le fournisseur radio mobile (5) couple la carte de paiement virtuelle ou le jeton de paiement virtuel à la SIM ou à l'eSIM,
**caractérisé en ce que**
l'unité radio mobile (2) est conçue de manière intégrée dans un véhicule (1), dans lequel le jeu de paramètres relatif à l'utilisateur est déterminé par un serveur (4) externe au véhicule du fabricant de véhicule et couplé au véhicule (1), et est transmis au fournisseur radio mobile (5), dans lequel en outre un jeu de paramètres spécifique à l'utilisateur et relatif au véhicule est déterminé par le serveur (4) externe au véhicule du fabricant de véhicule et est transmis au fournisseur radio mobile (5), lequel le couple également à la SIM ou à l'eSIM, dans lequel les jeux de paramètres couplés à la SIM ou à l'eSIM sont comparés, lors d'un paiement de biens et/ou de services, aux jeux de paramètres correspondants enregistrés chez le fournisseur radio mobile (5) et/ou sur le serveur (4) externe au véhicule du fabricant de véhicule, afin d'authentifier l'utilisateur.

2. Procédé selon la revendication 1,
**caractérisé en ce que**
lors du paiement, une liaison de communication est établie entre l'unité radio mobile (2) et le fournisseur radio mobile (5) et/ou le serveur (4) externe au véhicule, afin de transmettre la carte de paiement virtuelle ou le jeton de paiement virtuel couplé(e) à la SIM ou à l'eSIM, et les jeux de paramètres couplés à celle-ci sont comparés aux jeux de paramètres correspondants enregistrés chez le fournisseur radio mobile (5) et/ou sur le serveur (4) externe au véhicule du fabricant de véhicule, afin d'authentifier l'utilisateur, après quoi les données authentifiées nécessaires au paiement sont transmises à un fournisseur (3) des biens et/ou des services.

3. Procédé selon la revendication 1,
**caractérisé en ce que**
la carte de paiement virtuelle ou le jeton de paiement virtuel ainsi que les jeux de paramètres sont enregistrés sur la SIM ou l'eSIM lors du couplage avec celle-ci.

4. Procédé selon la revendication 3,
**caractérisé en ce que**
lors du paiement, la carte de paiement virtuelle ou le jeton de paiement virtuel couplé(e) à la SIM ou à l'eSIM et les jeux de paramètres qui y sont couplés sont transmis à un fournisseur (3) des biens et/ou des services, lequel lance, directement ou par l'intermédiaire du fournisseur de services de paiement (6), la comparaison des jeux de paramètres qui lui sont transmis avec les jeux de paramètres correspondants enregistrés chez le fournisseur radio mobile (5) et/ou sur le serveur (4) externe au véhicule du fabricant de véhicule.

5. Procédé selon la revendication 3 ou 4,
**caractérisé en ce que**
une date d'expiration est attribuée à la carte de paiement virtuelle ou au jeton de paiement virtuel enregistré(e) sur la SIM ou l'eSIM, ainsi qu'aux jeux de paramètres.

6. Procédé selon l'une des revendications 1 à 5,
**caractérisé en ce que**
les données concernant l'utilisateur détectées par des capteurs de véhicule sont intégrées dans le jeu de paramètres relatif à l'utilisateur.

7. Procédé selon l'une des revendications 1 à 6,
**caractérisé en ce que**
le jeu de paramètres relatif à l'utilisateur comprend au moins des données biométriques, le nom, l'adresse électronique, les coordonnées bancaires, le numéro de téléphone, le comportement de conduite, les réglages de siège, les autorisations d'accès au véhicule, les autorisations de conduite et/ou des données corporelles.

8. Procédé selon l'une des revendications 1 à 7,
**caractérisé en ce que**
le jeu de paramètres spécifique à l'utilisateur et relatif au véhicule comprend au moins un numéro d'identification du véhicule et/ou la configuration de capteurs disponible dans le véhicule (1).

9. Procédé selon l'une des revendications 1 à 8,
**caractérisé en ce que**
la carte de paiement virtuelle ou le jeton de paiement virtuel est créé(e) et transmis(e) avec un cryptogramme.

10. Procédé selon l'une des revendications 1 à 9,
**caractérisé en ce que**
la comparaison des jeux de paramètres prend en compte les variations temporelles de certains paramètres des jeux de paramètres par le biais de procédés d'apprentissage automatique.

11. Procédé selon la revendication 10,
**caractérisé en ce que**
les certains paramètres sont pondérés différemment lors de la comparaison des jeux de paramètres.

12. Procédé selon la revendication 10 ou 11,
**caractérisé en ce que**
lors de l'utilisation de paramètres caractérisant le comportement de l'utilisateur, en cas d'écarts nettement plus importants que ceux constatés jusqu'à présent lors de l'adaptation par l'apprentissage automatique, l'authentification est refusée ou le montant maximal du paiement est limité.

13. Procédé selon l'une des revendications 1 à 12,
**caractérisé en ce que**
la carte de paiement virtuelle ou le jeton de paiement virtuel est renouvelé(e) périodiquement dans le temps ou pour chaque opération de paiement.

14. Procédé selon l'une des revendications 1 à 13,
**caractérisé en ce que**
la carte de paiement virtuelle ou le jeton de paiement virtuel est transmis(e) par le fournisseur radio mobile (5) ou, parallèlement à la transmission au fournisseur radio mobile (5), par le fournisseur de services de paiement (6) au serveur (4) externe au véhicule du fabricant de véhicule et y est enregistré.
